**Europäisches Patentamt**

(19) **European Patent Office**

**Office européen des brevets**

(11) Publication number : **0 520 922 A2**

(12) **EUROPEAN PATENT APPLICATION**

(21) Application number : **92480076.6**

(22) Date of filing : **03.06.92**

(51) Int. Cl.⁵ : **G06F 9/44**

(30) Priority : **28.06.91 US 723006**

(43) Date of publication of application :
**30.12.92 Bulletin 92/53**

(84) Designated Contracting States :
**DE FR GB**

(71) Applicant : **International Business Machines Corporation**
**Old Orchard Road**
**Armonk, N.Y. 10504 (US)**

(72) Inventor : **Miller, Patrice R.**
**986 Quail Ridge**
**Keller, TX 76248 (US)**
Inventor : **Miller, Wade A.**
**986 Quail Ridge**
**Keller, TX 76248 (US)**
Inventor : **Rayborn, John K.**
**5631 Southwestern Boulevard**
**Dallas, TX 75209 (US)**

(74) Representative : **de Pena, Alain**
**Compagnie IBM France Département de Propriété Intellectuelle**
**F-06610 La Gaude (FR)**

(54) **Method and apparatus for accessing location information.**

(57) A method and apparatus in an object-oriented development tool kit for accessing location information in a graphic user interface operating environment. The location manager receives a request to access location information from an application in an object-oriented environment in an object-oriented memory location in a memory. If the location access request is for location information, a search of a location tree in the object-oriented environment is made for the presence of location information. If location formation corresponding to the location access request is present, location information corresponding to the location access request is retrieved from the location tree. But if location information corresponding to the location access request is absent from the location tree, a location access message for location information is sent to the graphic user interface operating environment. In response, a message containing location information corresponding to the location access request is received. Next, the location tree is updated with location information corresponding to the location accesss request and a result is returned to the application. If, however, the location access request is for modifying location information, a modification is made by sending a location access message for a modification the graphic user interface environment. A message containing information on the successs of the location access message for a modification is received in response. If the message containing information on the success of the attempting step is positive, the location tree is updated with the modification and the result is returned to the application.

Fig. 4

The present invention relates in general to an objectoriented development tool kit component for aiding in developing applications for use with a graphic user interface operating environment that is operating in a nonobject-oriented environment, and in particular to a method for accessing location information from the graphic user interface operating environment outside of the objectoriented environment. Still more particularly, the present invention relates to a method for accessing location information from a graphic user interface operating environment outside of the object-oriented environment by eliminating the need for a developer of object-oriented applications to understand and use program calls specific to the operating environment and developing applications for use with the operating environment.

Object-oriented languages confer the benefits of extendibility and reusable rode, but in an object-oriented environment, situations exist in which operations such as accessing data outside the environment, sending information outside of the environment, or other programming calls to applications or operating systems outside of the environment may be desirable. At this point in time, graphic user interface operating environments not in an object-oriented environment are being developed in which application developers desire to create applications for use with these operating environments. In some situations, an application developer may be programming in an objectoriented language. In such a case, it is necessary to perform operations both inside and outside the objectoriented environment. One operating environment is an end user interface which is an operating environment using the methodology, including devices, by which an end user interacts with the operating environment, an application in the environment. A graphic user interface ("GUI") operating environment is an end user environment that is graphical. For example, the end user interacts with the environment via windows, icons, menus, pointing devices, etc.

Presently, persons writing applications in an object-oriented language for GUI operating environments must include in their applications C code and/or application programming interface ("API") calls. The use of C language or API calls and the retraining issues for programmers and developers trained in object-oriented languages are extremely costly.

Applications may be built using objects. In an objectoriented environment, an object consists of related pieces of code and data. An object has a library of methods which are essentially unique to an object giving the object its specific behaviors. The class of an object defines a grouping based on one or more properties, and an instance as a single item in a class. For example, a class of an object could be considered as analogous to professions, i. e., lawyers, doctors, engineers, and programmers, with an instance of an object being analogous to a particular individual in a class.

A class defines methods for constructing new instances and also instance methods which define how an instance behaves and reacts to incoming messages. The instance variables define the particular features of an instance object such as an individual's salary. The instance variables may be defined or may be empty awaiting definition. An instance's data structure is described by its collection of instance variables. Applications in object-oriented environments may be divided into three basic components: models, view, and controllers. Model objects are the components of the application that does the work; i.e., manipulate data. Next, view objects handle all graphical aspects; i.e., screen presentation. The controller objects make up the interface between model objects, view objects, and input devices (e.g., keyboard or pointing device). In other words, the controller objects deals with user input device interactions.

Some GUI operating environments, such as OfficeVision/2, a product of International Business Machines Corporation, are not created using an object-oriented language. Presently in such a situation, the only development option available to developers for creating applications for use with such an operating environment has been to create applications using C language, Presentation Manager, and OfficeVision/2 API's.

In writing applications for a GUI operating environment, accessing location information is often required. For example, an application developer might write an application in which the user would need to save a portion of the input into an operating environment location. In such a situation, the application developer would like to present a list of locations in the operating environment from which the user could choose from.

Locations in a GUI operating environment are logical locations which may or may not correspond to actual directories or subdirectories on a hard drive or some other storage unit.

Since an application developed for a GUI operating environment will require accessing location information in the operating environment, it should therefore be apparent that a method and apparatus is needed for developers programming in object-oriented languages in which the use of another language or learning specific application program interface calls and the retraining involved would be eliminated.

It is therefore one object of the present invention to provide an object-oriented development tool kit component for aiding in developing applications for use with a GUI operating environment that is operating in a nonobjectoriented environment.

It is another object of the present invention to provide a method for accessing location information from the GUI operating environment outside of the object-oriented environment.

2

It is yet another object of the present invention to provide a method for accessing location information from a GUI operating environment outside of the object-oriented environment which eliminates the need for a developer of object-oriented applications to understand and use program calls specific to the operating environment and developing applications for use with the operating environment.

Additional objects, features, and advantages will be apparent in the written description which follows. The method and apparatus of the present invention includes a method in an object-oriented software system that provides access to location information to an application in an object-oriented environment that requests location information from a graphic user interface operating environment. The location manager receives a request to access location information from an application in an objectoriented environment in an object-oriented memory location in a memory. If the location access request is for location information, a search of a location tree in the object oriented environment is made for the presence of location information. If location information corresponding to the location access request is present, location information corresponding to the location access request is retrieved from the location tree. But if location information corresponding to the location access request is absent from the location tree, a location access message for location information is sent to the graphic user interface operating environment. In response, a message containing location information corresponding to the location access request is received. Next, the location tree is updated with location information corresponding to the location accesss request and a result is returned to the application.

If, however, the location access request is for modifying location information, a modification is made by sending a location access message for a modification the graphic user interface environment. A message containing information on the successs of the location access message for a modification is received in response. If the message containing information on the success of the attempting step is positive, the location tree is updated with the modification and the result is returned to the application.

The invention covers a method for inserting an item into a location and displaying an icon representing said item into a window representing said location in a graphic user interface operating environment comprising:

receiving a location access request to insert said item into said location from an application in an object-oriented environment;

searching a location tree in said object-oriented environment to determine whether said location is valid and whether said location is open and visible;

if location information is absent from said location tree, sending a query to said graphic user interface operating environment for a determination of whether said location is a valid location and whether said location is open and visible;

if said location is valid, updating said location tree with said location, sending an add item message to said location; and

if location is valid and open and visible, sending said location an add icon message; and

sending a result to said application.

The above as well as additional objects, features, and advantages of the invention will become apparent in the following detailed description, wherein:

Figure 1 depicts a pictorial representation of a distributed data processing system which may be utilized to implement the method of the present invention;

Figure 2 is a diagram depicting a method of accessing location information in accordance with a preferred embodiment of the present invention;

Figure 3 depicts the architecture of a location tree used by a location manager in a preferred embodiment of the present invention;

Figure 4 is a high level flowchart depicting a method for accessing location information under a preferred embodiment of the present invention;

Figure 5 depicts a high level flowchart of a method for accessing location information in accordance with a preferred embodiment of the present invention; and

Figure 6 is a high level flowchart depicting a method of accessing location information under a preferred embodiment of the present invention.

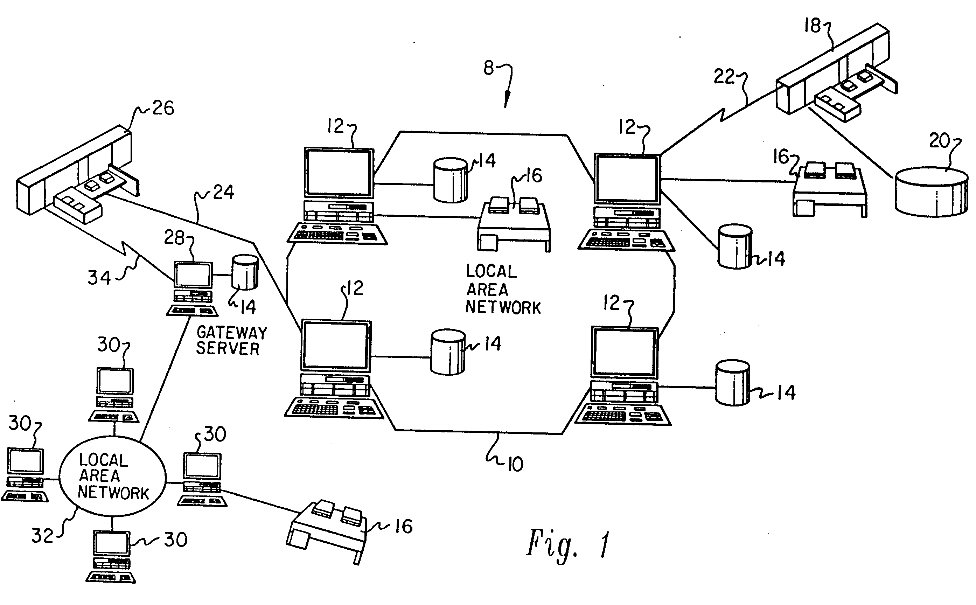

With reference now to the figures, and in particular with reference to Figure 1, there is depicted a pictorial representation of a data processing system 8 which may be utilized to implement the method of the present invention. As may be seen, data processing system 8 may include a plurality of networks, such as Local Area Networks (LAN) 10 and 32, each of which preferably includes a plurality of individual computers 12 and 30, respectively. Of course, those skilled in the art will appreciate that a plurality of Intelligent Work Stations (IWS) coupled to a host processor may be utilized for each such network.

As is common in such data processing systems, each individual computer may be coupled to a storage device 14 and/or a printer/output device 16. One or more such storage devices 14 may be utilized, in accordance with the method of the present invention, to store documents or resource objects which may be periodically accessed by any user within data processing system 8. In a manner well known in the prior art, each such document or resource object stored within a storage device 14 may be freely interchanged throughout data processing system 8 by transferring a document to a user at an individual computer 12 or 32, for example.

Still referring to Figure 1, it may be seen that data processing network 8 may also include multiple mainframe computers, such as mainframe computer 18, which may be preferably coupled to Local Area Network (LAN) 10 by means of communications link 22. Main frame computer 18 may also be coupled to a storage device 20 which may serve as remote storage for Local Area Network (LAN) 10. Similarly, Local Area Network (LAN) 10 may be coupled via communications link 24 through a subsystem control unit/ communications controller 26 and communications link 34 to a gateway server 28. Gateway server 28 is preferably an individual computer or Interactive Work Station (IWS) which serves to link Local Area Network (LAN) 32 to Local Area Network (LAN) 10.

As discussed above with respect to Local Area Network (LAN) 32 and Local Area Network (LAN) 10, a plurality of documents or resource objects may be stored within storage device 20 and controlled by main frame computer 18, as Resource Manager or Library Service for the resource objects thus stored. Of course, those skilled in the art will appreciate that main frame computer 18 may be located a great geographic distance from Local Area Network (LAN) 10 and similarly Local Area Network (LAN) 10 may be located a substantial distance from Local Area Network (LAN) 32.

A GUI operating environment may be found on individual computers 12 and 30, on gateway server 28, on some computer in LAN 10 or 32, or on mainframe computer 18. Individuals may use a GUI operating environment as a stand alone on their individual computers or may use a GUI operating environment as a user on a LAN.

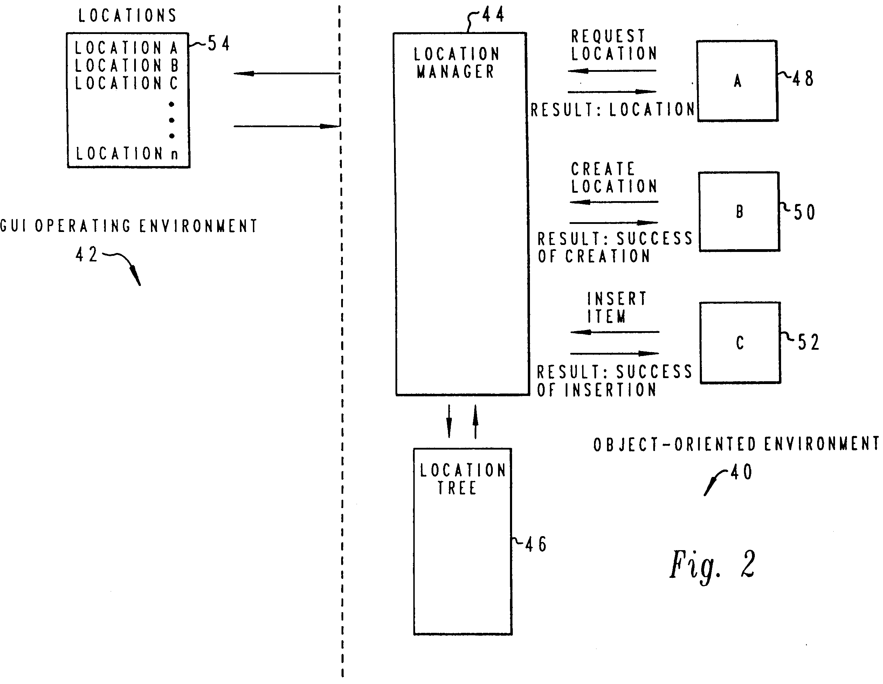

Referring now to Figure 2, a diagram depicting a method of accessing location information in accordance with a preferred embodiment of the present invention is depicted. As illustrated, a distributed data processing system 8 is depicted as including an object-oriented environment 40 and a GUI operating environment 42. One such GUI operating environment which would be suitable for use with a preferred embodiment of the present invention is OfficeVision/2, a product of International Business Machines Corporation. Smalltalk/V PM, a product of Digitalk, Inc., is an object-oriented environment used in a preferred embodiment of the invention.

The location manager 44 is an object within the objectoriented environment. The location tree 46 is created and maintained by location Manager 44 and is also located in object-oriented environment 40. Application A 48, Application B 50 and Application C 52 send location access requests to location manager 44. These requests may take the form of a request for location information, creating new locations, or inserting items into a location.

For example, Application A 48 may prompt a user to store a document. The application developer may wish to present a user with a list of locations. Thus, Application A 48 would send a location access request for location information to the location manager 44. The location manager 44 would perform a search in location tree 46 for the requested location information. If the requested location information is present in location tree 46, the information is retrieved by location manager 44 and returned as a result to Application A 48. On the other hand, if the location information requested by Application A 48 is not found in location tree 46, the location information is retrieved from a structure 54 in GUI operating environment 42. The location information would be returned to location manager 44 and location tree 46 would be updated with the new location information. Thereafter, the location information is sent to Application A 48 as a result.

In another example, Application B 50 is a container requesting the location manager 44 to add the name of the container as a valid entry in the location table 54.

Adding Application B 50 would enable all other applications to recognize and present Application B 50 as a valid location. Application B 50 would send a location access request for modifying location information, wherein the modification would be to create a location.

Upon receiving the request, location manager 44 sends a location access message to GUI operating environment 42 to modify the location table 54 to add Application B 50 as a new location. A message as to the success or failure of the modification is returned by GUI operating environment 42 to location manager 44. If the modification is successful, location manager 44 updates location tree 46 and returns the results of the success to Application B 50. If for some reason the location cannot be created, location tree 46 is not updated and the message of the failure to create a new location is returned to Application B 50.

Application C 52 requests location manager 44 to insert an item into a location. A location access message for modification by inserting an item into a location is sent to location manager 44. Location manager 44 queries GUI operating environment 42 to determine whether the location is valid and whether the location is opened and visible. GUI operating environment 42 sends a message containing the validity and the openness and visibility of the location to location manager 44. If the location is valid, location manager 44 sends an add item message to the location in which the item is to be added. If the location is both valid and open and visible, an insert icon message is sent to the location to make the new item visible to a user without having to manually refresh the screen on which the location and the item is displayed.

The requests made by Application A 48, Application B 50, and Application C 52 are examples of some of the types of location access that might be needed by an application; these examples are not intended to be limiting. Moreover, the locations are logical locations whose names that may or may not correspond to physical locations on a storage device; i.e., hard disk drives or optical disk.

API calls are used to effect all interaction with the GUI operating environment 42 and the location table 54. The API calls necessary to perform all the location accessing is in Smalltalk code within the location manager 44, thus allowing the application developer to produce applications that access location information without needing to know C language or which OfficeVision/2 API should be used, or even the parameters that the API expects. Instead, the application developer programs the application to access location manager 44. Listed below are the object services made available by location manager for access within Smalltalk V/PM:

1. Extract Class From Location - extracts objects of a specific class from a given location.

2. Extract Class From Path - extracts objects of a specific class from a given subdirectory path.

3. Query Default Nif Path - queries OfficeVision/2 to determine the subdirectory path of the New Icons Folder.

4. Query Default Office Path - queries OfficeVision/2 to determine the path where OfficeVision/2 resides.

5. Query Location Class - determines the OfficeVision/2 class for the location provided to this method.

6. Query Location Path - determines the OfficeVision/2 path for the location provided to this method.

7. Query Nif Path - returns the fully qualified New Icons Folder path (a combination of numbers 3 and 4 of this list).

8. Query Office Locations - returns a list of all valid OfficeVision/2 locations for this desktop.

9. Query OS2 Drawer Path - returns the OS2 path of an OfficeVision/2 drawer.

10. Query OW Path - returns the OS2 path of the Office Window.

Location manager allows an application developer to access OfficeVision/2 location information by simply invoking the use of location manager. Thus, location manager provides a tool to allow the application developer to concentrate on creating applications in an object-oriented environment, such as Smalltalk V/VPM, without having to learn or write code necessary to perform the listed functions above which are required for applications developed for use with OfficeVision/2. Consequently, the time and complexity involved in integrating applications with OfficeVision/2 is reduced.

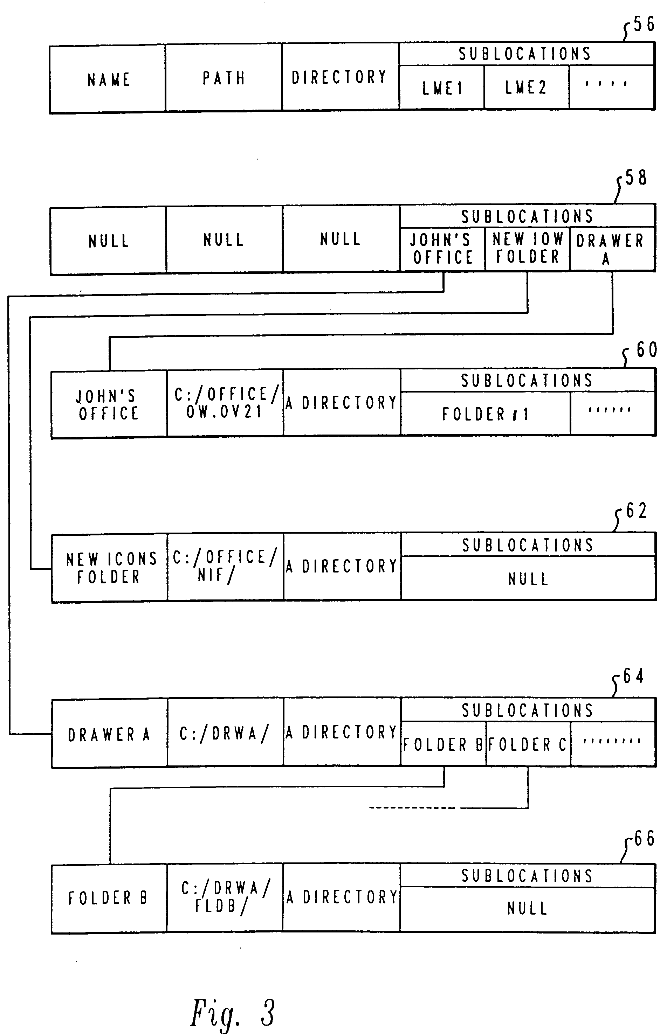

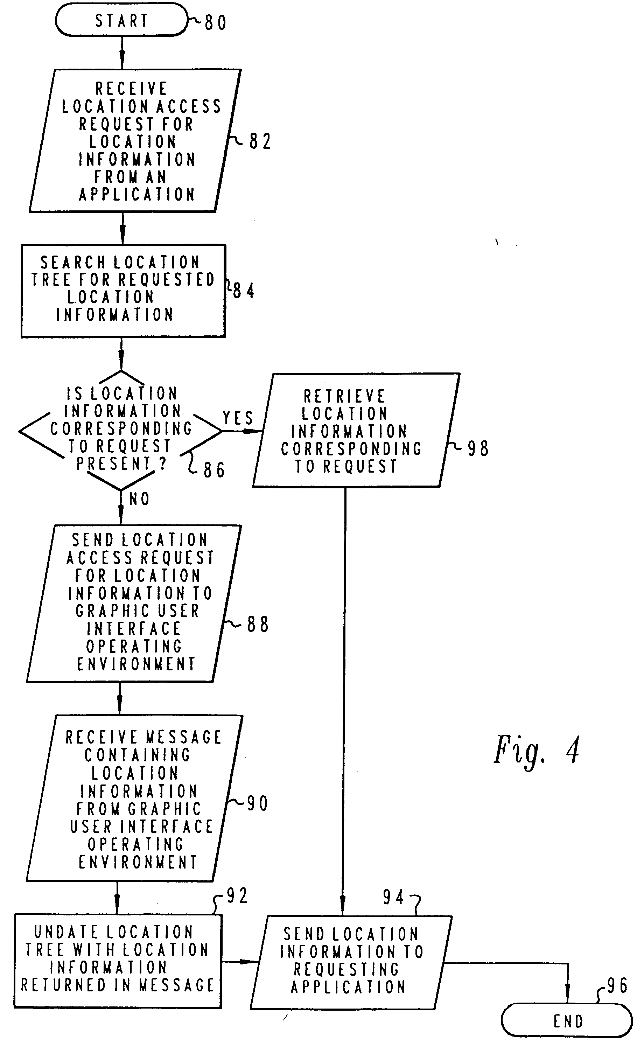

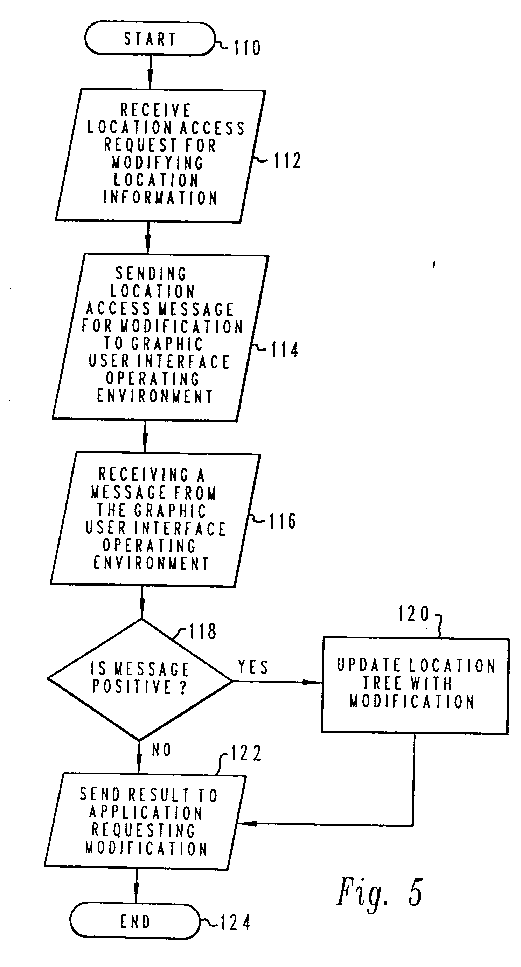

Figure 3 depicts the architecture of a location tree used by a location manager in a preferred embodiment of the invention. Each location manager entry 56 contains four groupings of information: name, path, directory and sublocations. Each sublocation contains information or pointers pointing the location manager entry ("LME") 56 to LME's on the next lower level. Each LME also contains a pointer pointing the LME to the LME above it in the location tree. The root node or root LME contains null values for name, path, and directory so that the location manager will know when it is returned to the root level.

In this example, root location manager entry 58 contains sublocations to John's office, new icon folder, and Drawer A. John's office 60, new icon folder 62, and Drawer A 64 are LME one level below the root location manager entry. Each of these location manager entries also contain a name, path, directory, and sublocation information. For example, Drawer A 64 contains sublocations called Folder B, Folder C, etc. Folder B 66 is one level below Drawer A 64 and two levels below root LME 58. As noted before, Folder B 66 contains a pointer back to Drawer A 64. Such a location tree architecture allows location manager to quickly search or modify the location tree when receiving requests from applications requiring access to location information. This location tree minimizes the need to obtain information from the GUI operating environment, thus increasing the performance of the application in terms of time and speed.

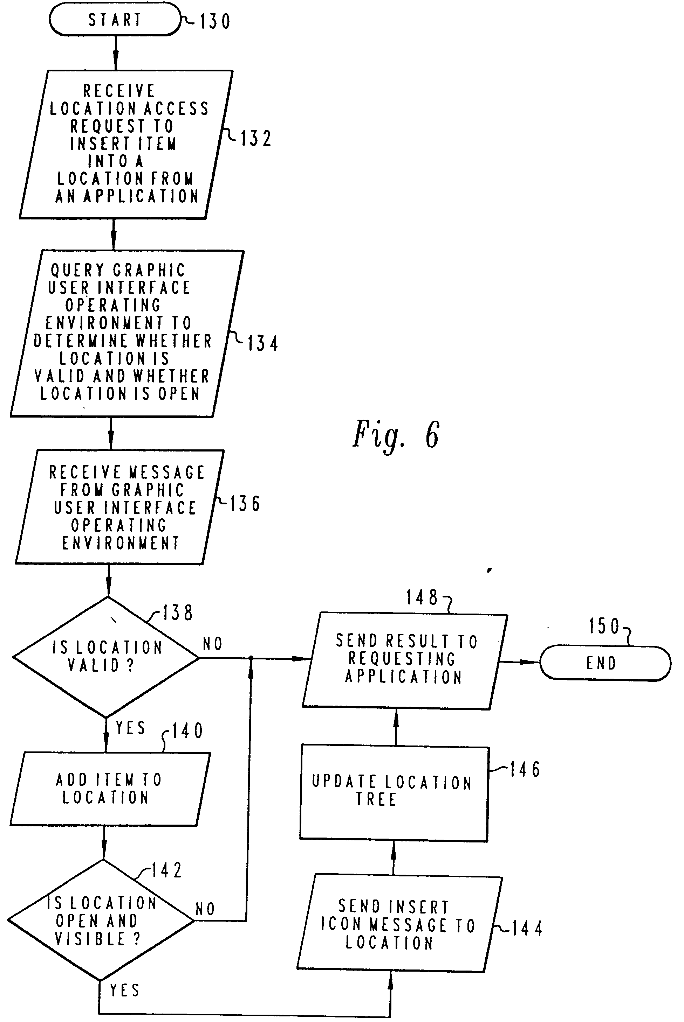

Figure 4 is a high level flowchart depicting a method for accessing location information under a preferred embodiment of the invention. As illustrated, the process begins at block 80 and thereafter passes to block 82 which illustrates the receiving of a location access request from an application for location information. Next, block 84 shows a search of a location tree is made for location information corresponding to the location access request. Block 86 illustrates a determination of whether a search of the location tree resulted in finding location information corresponding to the location access request.

If no location information corresponding to the location access request is found in the search of the location tree, as determined by block 86, then the process passes to block 88 which shows sending a location access request for location information to a GUI operating environment. The step shown in block 88 involves translating the location access request into the appropriate API calls or some other call specific to the GUI operating system. Next block 90 illustrates receiving a message from the GUI operating environment containing the requested location information. Thereafter, block 92 shows updating the location tree with the location information returned in the message.

In receiving the location information from the GUI operating environment, the location information may be converted into a format specified or required by the application requesting the location information, or the location information may be sent directly to the application without any modification. The process proceeds to block 94 which illustrates the location information corresponding to the location access request to the application. The illustrative process then terminates, as shown in block 96.

Referring again to block 86, in the event the search performed in block 84 results in location information corresponding to the location-access request being present in the location tree, the process then proceeds to block 98 which shows the class information being retrieved from the location tree. Next the process proceeds to block 94 illustrating the location information being sent to the application. Thereafter, the process terminates in block 96.

Figure 5 depicts a high level flowchart of a method of accessing location information in accordance with a preferred embodiment of the present invention. As illustrated, the process begins at block 110 and thereafter passes to block 112 which illustrates the receiving of a location access request for modifying location information. Next, block 114 shows sending a location access message for modification to the GUI operating environment. The process then proceeds to block 116 wherein a message from the GUI operating environment is received in response to sending the location access message in block 114. Next, block 118 illustrates a determination of whether the message is positive.

If the message is positive, the process proceeds to block 120 which shows the location tree being updated with the modification. Afterwards, the result of the modification is sent to the requesting application, and the process ends in block 124.

Referring again to block 118, in the event that the message is not positive, the process proceeds to block 122 which illustrates sending the result of the modification; i.e. unable to make modification, to the application. Thereafter, the process terminates in block 124.

Figure 6 is a high level flowchart depicting a method of accessing location information under a preferred embodiment of the present invention. As illustrated, the process begins in block 130 and thereafter passes to block 132 which illustrates the receiving of a location access request to insert an item into a location from an application. Next, block 134 shows querying the GUI operating environment to determine whether the location is valid and whether the location is open and visible. Open and visible means that the location is in a window or view port that is opened or a video display and that the window or view port is visible to a user. In response to the query in block 134, receiving a message is illustrated in block 136 from the GUI operating environment.

Thereafter, block 138 shows determining whether the location is valid. If the location is valid, the process proceeds to block 140 where adding the item to the location is illustrated. Next, block 142 shows making a determination as to whether the location is open and visible. If the location is open and visible, the process proceeds to block 144 which illustrates the inserting of the icon in the location. Insertion of the icon is achieved by acquiring the pointer to the icon and sending the pointer to the location with a request that the icon be displayed.

Next, the location tree is updated as shown in block 146 and the process proceeds to block 148, illustrating sending the result of the location access request to insert the item to the application. Afterwards, the process terminates in block 150

Referring again to block 138, if the location is not valid the process then proceeds to block 148 which shows sending the result of the request to insert the item to the application making the request. Thereafter in block 158, the process terminates. In block 142, if the location is not open and visible, again the process will proceed to block 148 which shows sending the result to the application requesting insertion of the item and the process terminates in block 150.

The description of the steps in the present invention may be provided as a tool kit component for aiding in developing applications for use with GUI operating environments. In another embodiment the methods of the present invention may be implemented into a computer program for integrating object-oriented programs with GUI operating environment by providing access to location information.

The following are some examples of pseudo code that would be used under the present invention. The first example involves an application requesting location information from location manager.

Application:          Send request for location information to location manager.

Location Manager:     Search the current location tree to see if requested location information is already present.

If True:              Return location information to the requesting application.

If False:             Request location information from GUI; store location information in tree; and return location information to the application.

Next is an example of pseudo code involving location manager receiving a request from an application to modify location information in the GUI operating environment.

| | |
|---|---|
| Location Manager: | Receives a request from an application to modify location information. |
| | Send the modification request to the GUI operating environment. |
| | Check the code returned from GUI operating environment for success. |
| If True: | Update location tree to reflect changes. |
| If False: | Send error code to requesting application. |

Pseudo code involving the insertion of an item into a location by location manager in response to a request by an application could be written as follows:

| | |
|---|---|
| Application: | Send request to location manager to insert an item into a specified location. |
| Location Manager: | Send query to GUI operating environment to determine if location is valid and whether location is currently open. |
| | Is Location Valid? |
| If False: | Send error code to requesting application. |
| If True: | Add item to location. |
| | Is Location Open and Visible? |
| If False: | Return to requesting application. |
| If True: | Send insert icon message to opened location; update location tree; and send result to requesting application. |

## Claims

1. A method in an object-oriented software system for accessing location information in a graphic user interface operating environment comprising:

receiving a location access request from an application in an object-oriented environment in a memory location in a memory;

if said location access request is for location information, searching a location tree in said objectoriented environment for said location information, if location information corresponding to said location access request is present, retrieving location information corresponding to said location access request from said location tree, and if location information corresponding to said location access request is absent from said location tree, sending a location access message for location information to said graphic user interface operating environment, receiving a message containing location information corresponding to said location access request in response to said location access message, and updating said location tree with location information corresponding to said location accesss request;

if said location access request is for modifying location information, making a modification by sending a location access message for a modification to said graphic user interface environment, receiving a message containing information on the successs of said location access message for a modification, if said message containing information on the success of said attempting step is positive, updating said location tree with said modification; and

returning a result to said application.

2. The method of Claim 1 wherein said result contains location information corresponding to said location access request if said location access request is for location information.

3. The method of Claim 1 wherein said location access request for modifying location information is to insert an item into a location in said graphic user interface operating environment, and wherein said making a modification step comprises:

querying said graphic user interface operating system to determine whether said location is a valid location and whether said location is open and visible and receiving a message containing validity and openness and visibility of location from said graphic user interface operating environment in response to query;

if said location is valid, sending an add item message to said location; and

if location is valid, open, and visible, send said location a message to display an icon associated with said item.

4. The method of Claim 3 wherein the sending an add item message step further comprises receiving in response to said add item message a request from said location for said item to be placed at a specified place and placing item in said specified place.

5. The method of Claim 4 wherein the placing step comprises copying item to said specified place.

6. The method of Claim 4 wherein the placing step comprises moving said item to said specified place.

7. The method of Claim 5 wherein said specific place is a location on a storage device.

8. A location manager component implemented as a program means for modifying locations in a graphic user interface operating environment on an electronic digital computer system, comprising:
   a computer program means for receiving said request to modify said location from an application,
   a computer program means for sending a modify location message to said graphic user interface operating environment,
   a computer program means for receiving a response to said modify location message; and
   a computer program means for sending a result to said application.

9. The location manager component of Claim 8 wherein said request to modify said location is a request to add a location in said graphic user interface operating environment.

10. The location manager component of Claim 8 wherein said request to modify said location is a request to delete a location in said graphic user interface operating environment.

Fig. 1

*Fig. 2*

| NAME | PATH | DIRECTORY | SUBLOCATIONS | | |
|------|------|-----------|------|------|------|
| | | | LME1 | LME2 | . . . . |

56

| NULL | NULL | NULL | SUBLOCATIONS | | |
|------|------|------|------|------|------|
| | | | JOHN'S OFFICE | NEW IOW FOLDER | DRAWER A |

58

| JOHN'S OFFICE | C:/OFFICE/ OW.OV21 | A DIRECTORY | SUBLOCATIONS | |
|------|------|------|------|------|
| | | | FOLDER #1 | . . . . . . . |

60

| NEW ICONS FOLDER | C:/OFFICE/ NIF/ | A DIRECTORY | SUBLOCATIONS |
|------|------|------|------|
| | | | NULL |

62

| DRAWER A | C:/DRWA/ | A DIRECTORY | SUBLOCATIONS | | |
|------|------|------|------|------|------|
| | | | FOLDER B | FOLDER C | . . . . . . . . |

64

| FOLDER B | C:/DRWA/ FLDB/ | A DIRECTORY | SUBLOCATIONS |
|------|------|------|------|
| | | | NULL |

66

*Fig. 3*

*Fig. 4*

Flowchart:

START — 80

↓

RECEIVE LOCATION ACCESS REQUEST FOR LOCATION INFORMATION FROM AN APPLICATION — 82

↓

SEARCH LOCATION TREE FOR REQUESTED LOCATION INFORMATION — 84

↓

IS LOCATION INFORMATION CORRESPONDING TO REQUEST PRESENT ? — 86

YES → RETRIEVE LOCATION INFORMATION CORRESPONDING TO REQUEST — 98

NO ↓

SEND LOCATION ACCESS REQUEST FOR LOCATION INFORMATION TO GRAPHIC USER INTERFACE OPERATING ENVIRONMENT — 88

↓

RECEIVE MESSAGE CONTAINING LOCATION INFORMATION FROM GRAPHIC USER INTERFACE OPERATING ENVIRONMENT — 90

↓

UNDATE LOCATION TREE WITH LOCATION INFORMATION RETURNED IN MESSAGE — 92

→ SEND LOCATION INFORMATION TO REQUESTING APPLICATION — 94

→ END — 96

START ~110

RECEIVE
LOCATION ACCESS
REQUEST FOR
MODIFYING
LOCATION
INFORMATION ~112

SENDING
LOCATION
ACCESS MESSAGE
FOR MODIFICATION
TO GRAPHIC
USER INTERFACE
OPERATING
ENVIRONMENT ~114

RECEIVING A
MESSAGE FROM
THE GRAPHIC
USER INTERFACE
OPERATING
ENVIRONMENT ~116

IS MESSAGE
POSITIVE ? ~118

YES → UPDATE LOCATION
TREE WITH
MODIFICATION 120

NO

SEND RESULT TO
APPLICATION
REQUESTING
MODIFICATION ~122

END ~124

*Fig. 5*

START ～130

RECEIVE
LOCATION ACCESS
REQUEST TO
INSERT ITEM
INTO A
LOCATION FROM
AN APPLICATION ～132

QUERY GRAPHIC
USER INTERFACE
OPERATING
ENVIRONMENT TO
DETERMINE WHETHER
LOCATION IS
VALID AND WHETHER
LOCATION IS OPEN ～134

*Fig. 6*

RECEIVE MESSAGE
FROM GRAPHIC
USER INTERFACE
OPERATING
ENVIRONMENT ～136

IS LOCATION
VALID ? ～138

NO

IS LOCATION
VALID ?

YES ～140

ADD ITEM TO
LOCATION

IS LOCATION
OPEN AND
VISIBLE ? ～142

NO

YES

SEND INSERT
ICON MESSAGE TO
LOCATION ～144

UPDATE LOCATION
TREE ～146

SEND RESULT TO
REQUESTING
APPLICATION 148～

END 150～

14